# EUROPEAN PATENT APPLICATION

(11) **EP 4 274 283 A1**
(43) Date of publication of application: **08.11.2023**
(21) Application number: 23170322.4
(22) Date of filing: 27.04.2023
(51) Int. Cl.: H04W 12/06, H04L 1/18, H04W 80/02

(54) **RE-AUTHENTICATION OF USER EQUIPMENT (UE) TRIGGERED BY HOME NETWORK**

(30) Priority: 06.05.2022 IN 202241026481
(71) Applicant: Nokia Technologies Oy, 02610 Espoo (FI)
(72) Inventor: MAVUREDDI DHANASEKARAN, Ranganathan, Munich (DE); P NAIR, Suresh, Estero (US); KHARE, Saurabh, Bangalore (IN)
(74) Representative: Nokia EPO representatives

(57) **Abstract**

Systems, methods, and software of performing primary re-authentication of User Equipment (UE) (106). In one embodiment, a Unified Data Management (UDM) (218) triggers primary re-authentication of a UE in response to a trigger condition, and sends a re-authentication notification message toward an Access and Mobility Management Function (AMF) (212) to perform primary re-authentication of the UE.

## Description

### Technical Field

This disclosure is related to the field of communication systems and, in particular, to next generation networks.

### Background

Next generation networks, such as Fifth Generation (5G), denote the next major phase of mobile telecommunications standards beyond Fourth Generation (4G) standards. In comparison to 4G networks, next generation networks may be enhanced in terms of radio access and network architecture. Next generation networks intend to utilize new regions of the radio spectrum for Radio Access Networks (RANs), such as millimeter wave bands.

With mobile networks widely used across the country and the world, communications may be intercepted or suffer from other kinds of attacks. To ensure security and privacy, the 3rd Generation Partnership Project (3GPP) has set forth security mechanisms for 5G mobile networks, and the security procedures performed within the 5G mobile networks. One of the security procedures between User Equipment (UE) and a 5G mobile network is primary authentication and key agreement. Primary authentication and key agreement procedures enable mutual authentication between the UE and the network, and provide keying material that can be used between the UE and the serving network in subsequent security procedures.

Some of the present authentication procedures may be inefficient or not fully defined, and it may be desirable to identify improvements to the authentication procedures.

### Summary

Described herein is a primary re-authentication procedure for a UE that is triggered by the home network. More particularly, a Unified Data Management (UDM) of the home network triggers primary re-authentication of a UE in response to a trigger condition. One technical benefit is the home network has control over when re-authentication is performed, and mechanisms are defined to allow for re-authentication.

In one embodiment, a UDM element comprises at least one processor, and at least one memory including computer program code. The memory and the computer program code are configured to, with the processor, cause the UDM element at least to trigger primary re-authentication of a UE in response to a trigger condition, and send a re-authentication notification message toward an Access and Mobility Management Function (AMF) to perform primary re-authentication of the UE.

In one embodiment, the processor further causes the UDM element at least to send the re-authentication notification message directly to the AMF requesting that the AMF initiate primary re-authentication with an Authentication Server Function (AUSF).

In one embodiment, the processor further causes the UDM element at least to generate a home environment re-authentication vector for the primary re-authentication, and send the re-authentication notification message to an AUSF with the home environment re-authentication vector.

In one embodiment, the trigger condition comprises wrap-around of a UE Parameters Update (UPU) counter.

In one embodiment, the processor further causes the UDM element at least to decide to perform a UPU procedure, send a UPU protection request message to an AUSF, receive a UPU protection response message from the AUSF with a counter wrap error for the UPU counter, suspend the UPU procedure, and trigger the primary re-authentication of the UE based on the counter wrap error for the UPU counter.

In one embodiment, the processor further causes the UDM element at least to decide to perform a UPU procedure, send a UPU protection request message to an AUSF, receive a UPU protection response message from the AUSF with a maximum counter value indicator for the UPU counter, continue with a present iteration of the UPU procedure, and trigger the primary re-authentication of the UE after the present iteration of the UPU procedure based on the maximum counter value indicator.

In one embodiment, the trigger condition comprises wrap-around of a Steering of Roaming (SoR) counter.

In one embodiment, the processor further causes the UDM element at least to decide to perform a SoR procedure, send a SoR protection request message to an AUSF, receive a SoR protection response message from the AUSF with a counter wrap error for the SoR counter, suspend the SoR procedure, and trigger the primary re-authentication of the UE based on the counter wrap error for the SoR counter.

In one embodiment, the processor further causes the UDM element at least to decide to perform a SoR procedure, send a SoR protection request message to an AUSF, receive a SoR protection response message from the AUSF with a maximum counter value indicator for the SoR counter, continue with a present iteration of the SoR procedure, and trigger the primary re-authentication of the UE after the present iteration of the SoR procedure based on the maximum counter value indicator.

In one embodiment, the trigger condition comprises a re-authentication request from another network function.

In one embodiment, a method of performing primary re-authentication in a UDM is described. The method comprises triggering, at the UDM, primary re-authentication of a UE in response to a trigger condition, and sending, at the UDM, a re-authentication notification message toward an AMF to perform primary re-authentication of the UE.

In one embodiment, sending the re-authentication notification message toward the AMF comprises sending the re-authentication notification message from the UDM directly to the AMF requesting that the AMF initiate primary re-authentication with an AUSF.

In one embodiment, the method further comprises receiving the re-authentication notification message at the AMF from the UDM, and initiating, at the AMF, re-authentication towards the AUSF by sending an authentication request message to the AUSF.

In one embodiment, the method further comprises generating, at the UDM, a home environment re-authentication vector for the primary re-authentication. Sending the re-authentication notification message toward the AMF comprises sending the re-authentication notification message from the UDM to the AUSF with the home environment re-authentication vector.

In one embodiment, the method further comprises receiving the re-authentication notification message from the UDM at the AUSF, generating, at the AUSF, a serving environment re-authentication vector from the home environment re-authentication vector received from the UDM, and sending a re-authentication notification message from the AUSF to the AMF with the serving environment re-authentication vector.

In one embodiment, the method further comprises receiving the re-authentication notification message from the AUSF at the AMF, and sending a re-authentication request message from the AMF to the UE.

In one embodiment, the method further comprises receiving another re-authentication notification message at the AMF from another network function, and sending a re-authentication request message from the AMF to the UE.

In one embodiment, the trigger condition comprises wrap-around of a UE Parameters Update (UPU) counter.

In one embodiment, the trigger condition comprises wrap-around of a Steering of Roaming (SoR) counter.

In one embodiment, the trigger condition comprises a re-authentication request from another network function.

Other embodiments may include computer readable media, other systems, or other methods as described below. The various features of the different embodiments may be variously combined with some features included and others excluded to suit a variety of different applications.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 illustrates a high-level architecture of a 5G system.
FIG. 2 illustrates a non-roaming architecture of a 5G system.
FIG. 3 is a signaling diagram that illustrates initiation of primary authentication.
FIG. 4 is a signaling diagram that illustrates an authentication procedure.
FIG. 5 is a block diagram of a UDM in an illustrative embodiment.
FIG. 6 is block diagram of an AUSF in an illustrative embodiment.
FIG. 7 is block diagram of an AMF in an illustrative embodiment.
FIG. 8 is a flow chart illustrating a method of performing a re-authentication procedure in an illustrative embodiment.
FIGS. 9-10 are flow charts illustrating methods of performing a re-authentication procedure in an illustrative embodiment.
FIGS. 11-13 are flow charts illustrating methods of performing a re-authentication procedure in an illustrative embodiment.
FIGS. 14A-14C are message diagrams illustrating triggering of primary re-authentication due to wrap-around of a UPU counter in illustrative embodiments.
FIGS. 15-17 are flow charts illustrating methods of performing a re-authentication procedure in a UDM in an illustrative embodiment.
FIGS. 18A-18C are message diagrams illustrating triggering of primary re-authentication due to wrap-around of a SoR counter in illustrative embodiments.
FIGS. 19-21 are flow charts illustrating methods of performing a re-authentication procedure in a UDM in illustrative embodiments.
FIG. 22 is a message diagram illustrating triggering of primary re-authentication due to a request from another network element/function in an illustrative embodiment.
FIG. 23 is a flow chart illustrating a method of performing a re-authentication procedure in a UDM in an illustrative embodiment.
FIG. 24 is a message diagram illustrating triggering of primary re-authentication at an AMF in an illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

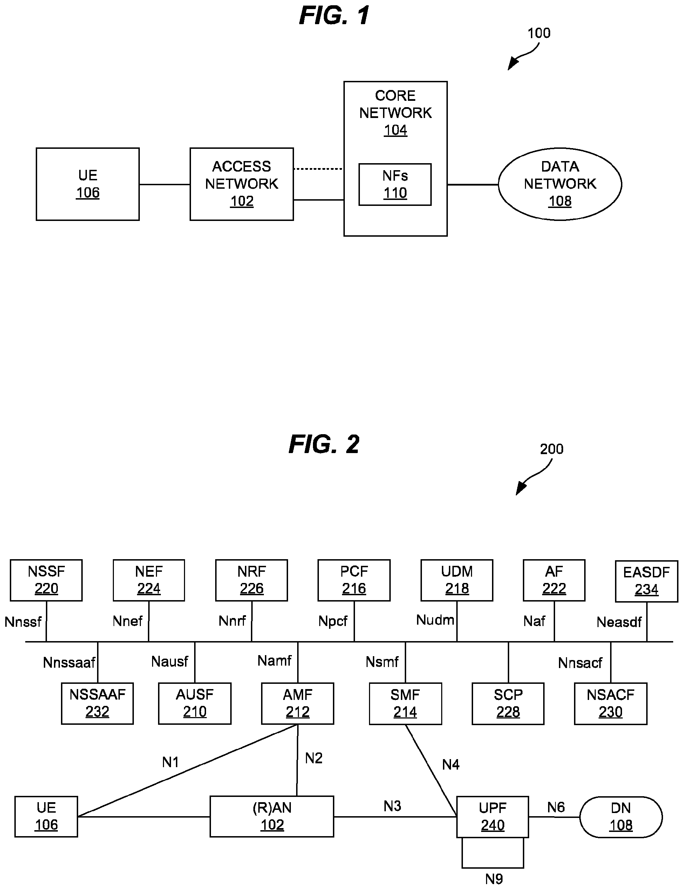

FIG. 1 illustrates a high-level architecture of a 5G system 100. A 5G system 100 is a communication system (e.g., a 3GPP system) comprising a 5G Access Network ((R)AN) 102, a 5G Core Network (CN) 104, and 5G User Equipment (UE) 106. Access network 102 may comprise an NG-RAN and/or a non-3GPP access network connecting to a 5G core network 104. Access network 102 may support Evolved-UMTS Terrestrial Radio Access Network (E-UTRAN) access (e.g., through an eNodeB, gNodeB, and/or ng-eNodeB), Wireless Local Area Network (WLAN) access, fixed access, satellite radio access, new Radio Access Technologies (RAT), etc. Core network 104 interconnects access network 102 with a data network (DN) 108. Core network 104 is comprised of Network Functions (NF) 110, which may be implemented either as a network element on dedicated hardware, as a software instance running on dedicated hardware, as a virtualized function instantiated on an appropriate platform (e.g., a cloud infrastructure), etc. Data network 108 may be an operator external public or private data network, or an intra-operator data network (e.g., for IMS services). UE 106 is a 5G capable device configured to register with core network 104 to access services. UE 106 may be an end user device, such as a mobile phone (e.g., smartphone), a tablet or PDA, a computer with a mobile broadband adapter, etc. UE 106 may be enabled for voice services, data services, Machine-to-Machine (M2M) or Machine Type Communications (MTC) services, and/or other services.

FIG. 2 illustrates a non-roaming architecture 200 of a 5G system. The architecture 200 in FIG. 2 is a service-based representation, as is further described in 3GPP TS 23.501 (v17.4.0), which is incorporated by reference as if fully included herein. Architecture 200 is comprised of Network Functions (NF) for a core network 104, and the NFs for the control plane (CP) are separated from the user plane (UP). The control plane of the core network 104 includes an Authentication Server Function (AUSF) 210, an Access and Mobility Management Function (AMF) 212, a Session Management Function (SMF) 214, a Policy Control Function (PCF) 216, a Unified Data Management (UDM) 218, a Network Slice Selection Function (NSSF) 220, and an Application Function (AF) 222. The control plane of the core network 104 further includes a Network Exposure Function (NEF) 224, a NF Repository Function (NRF) 226, a Service Communication Proxy (SCP) 228, a Network Slice Admission Control Function (NSACF) 230, a Network Slice-specific and SNPN Authentication and Authorization Function (NSSAAF) 232, and an Edge Application Server Discovery Function (EASDF) 234. The user plane of the core network 104 includes one or more User Plane Functions (UPF) 240 that communicate with data network 108. UE 106 is able to access the control plane and the user plane of the core network 104 through (R)AN 102.

There are a large number of subscribers that are able to access services from a carrier that implements a mobile network comprising a 5G system 100, such as in FIGS. 1-2. Communications between the subscribers (i.e., through a UE) and the mobile network are protected by security mechanisms, such as the ones standardized by the 3GPP. Subscribers and the carrier expect security guarantees from the security mechanisms. One of the security mechanisms is the primary authentication procedure that provides mutual authentication between the UE and the network. The following further illustrates primary authentication.

The purpose of the primary authentication and key agreement procedures is to enable mutual authentication between UE 106 and the network, and provide keying material that can be used between the UE 106 and the serving network in subsequent security procedures. The keying material generated by the primary authentication and key agreement procedure results in an anchor key called the K_{SEAF} key provided by the AUSF 210 of the home network to the Security Anchor Function (SEAF) of the serving network. The SEAF provides authentication functionality via the AMF 212 in the serving network, and supports primary authentication using a Subscription Concealed Identifier (SUCI) that contains the concealed Subscription Permanent Identifier (SUPI). The SUPI is a globally unique 5G identifier allocated to each subscriber in the 5G system 100. The SUCI is composed a SUPI type, a Home Network Identifier (HN-ID) identifying the home network of the subscriber, a Routing Indicator (RID) that is assigned to the subscriber by the home network operator and provisioned in the Universal Subscriber Identity Module (USIM) of the UE, a Protection Scheme Identifier, a Home Network Public Key Identifier, and a Scheme Output. The anchor key K_{SEAF} is derived from an intermediate key called the K_{AUSF} key. The K_{AUSF} key is established between the UE 106 and the home network resulting from the primary authentication procedure.

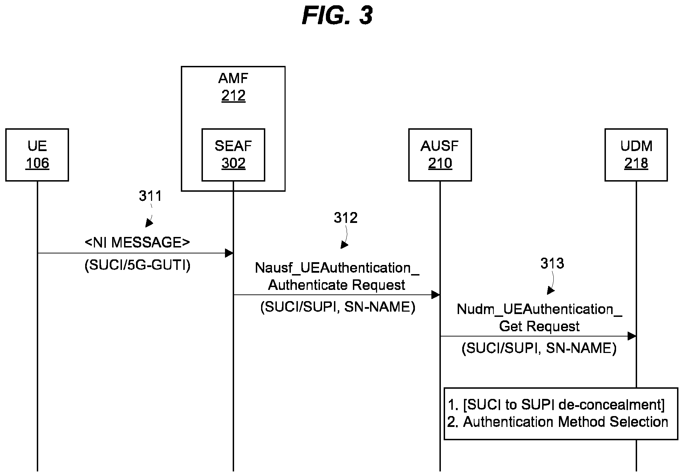

FIG. 3 is a signaling diagram that illustrates initiation of primary authentication, such as described in 3GPP TS 33.501 (v17.5.0), which is incorporated by reference as if fully included herein. UE 106 transmits an N1 message 311 (i.e., an initial Non-Access Stratum (NAS) message) to the serving network (e.g., the AMF 212 of the serving network), such as a Registration Request. UE 106 uses the SUCI or a 5G Global Unique Temporary Identifier (5G-GUTI) in the Registration Request. SEAF 302 of the AMF 212 may initiate an authentication with UE 106 during any procedure establishing a signaling connection with UE 106. SEAF 302 invokes the Nausf_UEAuthentication service by sending a Nausf_UEAuthentication_Authenticate Request message 312 to AUSF 210 to initiate an authentication. The Nausf_UEAuthentication_Authenticate Request message includes the SUCI or SUPI, and the serving network name (SN-Name). Upon receiving the Nausf_UEAuthentication_Authenticate Request message 312, AUSF 210 checks that the requesting SEAF 302 in the serving network is entitled to use the serving network name in the Nausf_UEAuthentication_Authenticate Request message 312 by comparing the serving network name with the expected serving network name. When the serving network is authorized to use the serving network name, AUSF 210 sends a Nudm_UEAuthentication_Get Request message 313 to UDM 218. The Nudm_UEAuthentication_Get Request message 313 includes the SUCI or SUPI, and the serving network name. Upon reception of the Nudm _UEAuthentication_Get Request message 313, UDM 218 identifies the SUPI (if received), or invokes a Subscription Identifier De-concealing Function (SIDF) that de-conceals the SUPI from the SUCI (if received). UDM 218 (or an Authentication credential Repository and Processing Function (ARPF) of UDM 218) selects or chooses the authentication method for primary authentication based on the SUPI.

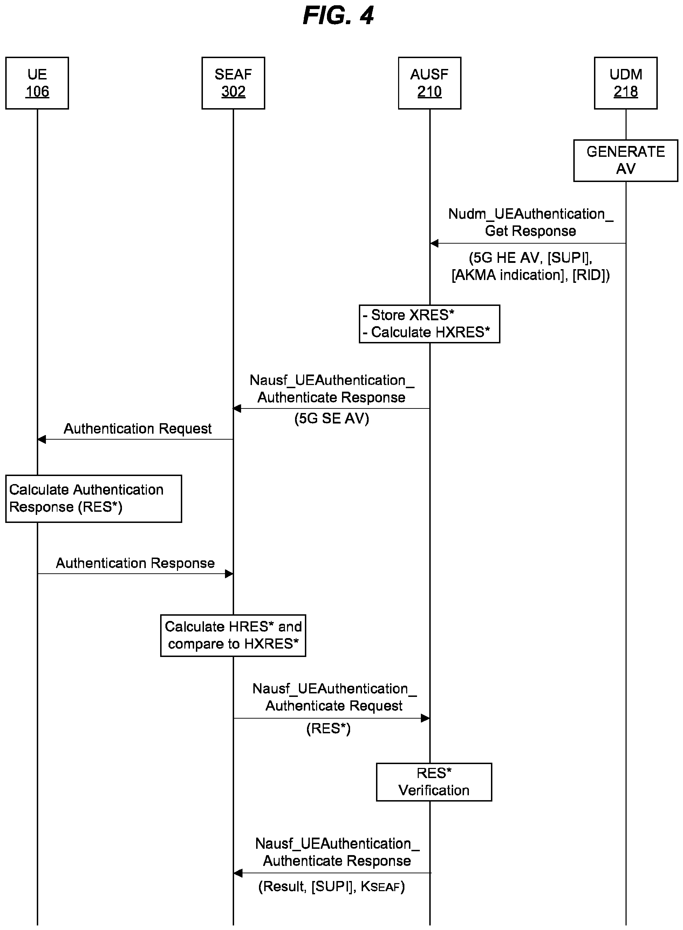

FIG. 4 is a signaling diagram that illustrates a primary authentication procedure, such as described in 3GPP TS 33.501. For a Nudm_UEAuthentication_Get Request, UDM 218 creates a 5G Home Environment Authentication Vector (5G HE AV) for the selected authentication method. UDM 218 derives the K_{AUSF} key and calculates an expected response (XRES*) to a challenge. UDM 218 creates the 5G HE AV comprising an authentication token (AUTN), the expected response (XRES*), the K_{AUSF} key, and a random challenge (RAND). UDM 218 then sends a Nudm _UEAuthentication_Get Response message to AUSF 210 with the 5G HE AV to be used for authentication (e.g., 5G Authentication and Key Agreement (AKA) in FIG. 4). In case the SUCI was included in the Nudm _UEAuthentication_Get Request, UDM 218 includes the SUPI in the Nudm _UEAuthentication_Get Response message after de-concealment of the SUCI. If a subscriber has an Authentication and Key Management for Application (AKMA) subscription, UDM 218 includes an AKMA indication and the RID in the Nudm _UEAuthentication_Get Response message.

In response to the Nudm _UEAuthentication_Get Response message, AUSF 210 stores the expected response (XRES*) temporarily with the received SUCI or SUPI. AUSF 210 then generates a 5G Authentication Vector (5G AV) from the 5G HE AV received from UDM 218, by computing the hash expected response (HXRES*) from the expected response (XRES*) and the K_{SEAF} key from the K_{AUSF} key, and replacing the XRES* with the HXRES* and the K_{AUSF} key with the K_{SEAF} key in the 5G HE AV. AUSF 210 removes the K_{SEAF} key to generate a 5G Serving Environment Authentication Vector (5G SE AV) that includes the authentication token (AUTN), hash expected response (HXRES*), and the random challenge (RAND). AUSF 210 sends a Nausf_UEAuthentication_Authenticate Response message to SEAF 302 that includes the 5G SE AV. In response, SEAF 302 sends the authentication token (AUTN) and the random challenge (RAND) to UE 106 in a NAS message Authentication Request message.

Although not shown in FIG. 4, UE 106 includes Mobile Equipment (ME) and a USIM. The ME receives the authentication token (AUTN) and the random challenge (RAND) in the NAS message Authentication Request, and forwards the authentication token (AUTN) and the random challenge (RAND) to the USIM. The USIM verifies the freshness of the received values by checking whether the authentication token (AUTN) can be accepted. If so, the USIM computes a response (RES), a cipher key (CK), and an integrity key (IK) based on the random challenge (RAND), and returns the response (RES), the CK key, and the IK key to the ME. The ME computes RES* from RES, and calculates the K_{AUSF} key from CK∥IK and the K_{SEAF} key from the K_{AUSF} key.

UE 106 sends a NAS message Authentication Response message to SEAF 302 that includes RES*. In response, SEAF 302 computes HRES* from RES*, and compares HRES* and HXRES*. If they coincide, SEAF 302 considers the authentication successful from the serving network point of view. SEAF 302 sends RES*, as received from UE 106, in a Nausf_UEAuthentication_Authenticate Request message to AUSF 210. When AUSF 210 receives the Nausf_UEAuthentication_Authenticate Request message including a RES* as authentication confirmation, AUSF 210 stores the K_{AUSF} key based on the home network operator's policy, and compares the received RES* with the stored XRES*. If the RES* and XRES* are equal, then AUSF 210 considers the authentication successful from the home network point of view. AUSF 210 informs UDM 218 about the authentication result (not shown). AUSF 210 also sends a Nausf_UEAuthentication_Authenticate Response message to SEAF 302 indicating whether or not the authentication was successful from the home network point of view. If the authentication was successful, the K_{SEAF} key is sent to SEAF 302 in the Nausf_UEAuthentication_Authenticate Response message. In case AUSF 210 received the SUCI from SEAF 302 in the authentication request, AUSF 210 includes the SUPI in the Nausf_UEAuthentication_Authenticate Response message if the authentication was successful.

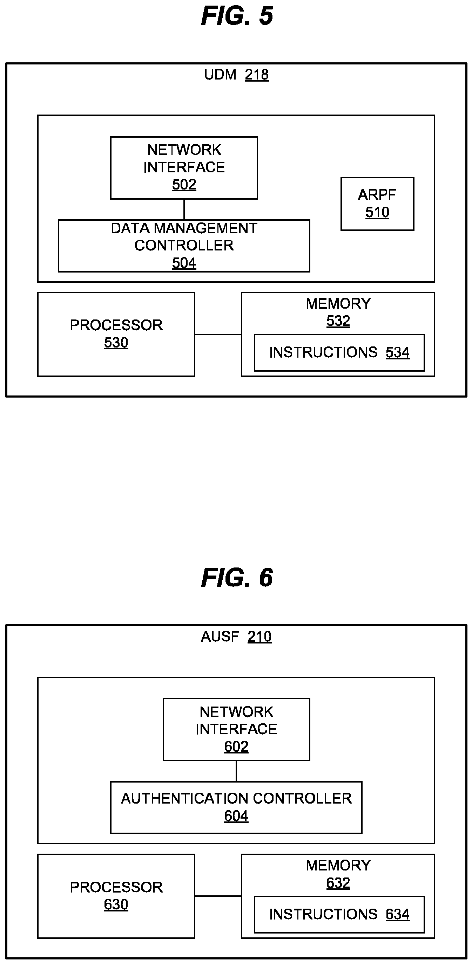

FIG. 5 is a block diagram of a UDM 218 in an illustrative embodiment. UDM 218 is a network element or network function configured to manage network user data with the 5G core network 104. In this embodiment, UDM 218 includes the following subsystems: a network interface component 502, and a data management controller 504 that operate on one or more platforms. Network interface component 502 may comprise circuitry, logic, hardware, means, etc., configured to exchange control plane messages or signaling with other network elements and/or UEs. Network interface component 502 may operate using a variety of protocols or reference points. Data management controller 504 may comprise circuitry, logic, hardware, means, etc., configured to support services, operations, procedures, or functions of a UDM. UDM 218 is also shown as including an ARPF 510.

One or more of the subsystems of UDM 218 may be implemented on a hardware platform comprised of analog and/or digital circuitry. For example, data management controller 504 may be implemented on one or more processors 530 that execute instructions 534 (i.e., computer readable code) for software that are loaded into memory 532. A processor 530 comprises an integrated hardware circuit configured to execute instructions 534 to provide the functions of UDM 218. Processor 530 may comprise a set of one or more processors or may comprise a multi-processor core, depending on the particular implementation. Memory 532 is a non-transitory computer readable storage medium for data, instructions, applications, etc., and is accessible by processor 530. Memory 532 is a hardware storage device capable of storing information on a temporary basis and/or a permanent basis. Memory 532 may comprise a random-access memory, or any other volatile or non-volatile storage device. One or more of the subsystems of UDM 218 may be implemented on a cloud-computing platform or another type of processing platform.

UDM 218 may include various other components not specifically illustrated in FIG. 5.

FIG. 6 is block diagram of an AUSF 210 in an illustrative embodiment. In this embodiment, AUSF 210 includes the following subsystems: a network interface component 602, and an authentication controller 604 that operate on one or more platforms. Network interface component 602 may comprise circuitry, logic, hardware, means, etc., configured to exchange control plane messages or signaling with other network elements and/or UEs. Network interface component 602 may operate using a variety of protocols or reference points. Authentication controller 604 may comprise circuitry, logic, hardware, means, etc., configured to support operations, procedures, or functions of an AUSF.

One or more of the subsystems of AUSF 210 may be implemented on a hardware platform comprised of analog and/or digital circuitry. One or more of the subsystems of AUSF 210 may be implemented on one or more processors 630 that execute instructions 634 (i.e., computer readable code) for software that are loaded into memory 632. One or more of the subsystems of AUSF 210 may be implemented on a cloud-computing platform or another type of processing platform.

AUSF 210 may include various other components not specifically illustrated in FIG. 6.

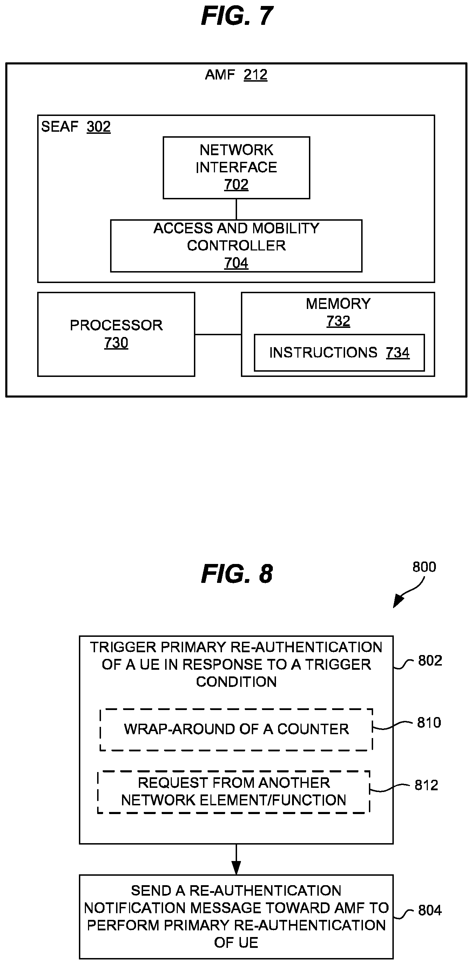

FIG. 7 is block diagram of an AMF 212 in an illustrative embodiment. In this embodiment, AMF 212 includes the following subsystems: a network interface component 702, and an access and mobility controller 704 that operate on one or more platforms. Network interface component 702 may comprise circuitry, logic, hardware, means, etc., configured to exchange control plane messages or signaling with other network elements and/or UEs. Network interface component 702 may operate using a variety of protocols or reference points. Access and mobility controller 704 may comprise circuitry, logic, hardware, means, etc., configured to support operations, procedures, or functions of an AMF.

One or more of the subsystems of AMF 212 may be implemented on a hardware platform comprised of analog and/or digital circuitry. One or more of the subsystems of AMF 212 may be implemented on one or more processors 730 that execute instructions 734 (i.e., computer readable code) for software that are loaded into memory 732. One or more of the subsystems of AMF 212 may be implemented on a cloud-computing platform or another type of processing platform.

AMF 212 may include various other components not specifically illustrated in FIG. 7.

In the following embodiments, the home network is able to initiate primary re-authentication of a UE 106 through UDM 218. FIG. 8 is a flow chart illustrating a method 800 of performing a re-authentication procedure in an illustrative embodiment. The steps of method 800 will be described with reference to UDM 218 in FIG. 5, but those skilled in the art will appreciate that method 800 may be performed in other systems, devices, or network functions. The steps of the flow charts described herein are not all inclusive and may include other steps not shown, and the steps may be performed in an alternative order.

Data management controller 504 of UDM 218 triggers primary re-authentication of a UE 106 in response to a trigger condition (step 802). The trigger condition may vary depending on policies of the operator network. In one embodiment, the trigger condition may be wrap-around of a counter (optional step 810), such as a counter for a UE Parameters Update (UPU), a counter for Steering of Roaming (SoR), and/or another type of counter. In one embodiment, the trigger condition may be a request from another network element or network function (optional step 812), such as a Network Function (NF) consumer or Application Function (AF) 222. The Network Function (NF) consumer or AF 222 may have an internal trigger condition, for example, keys expiry to trigger re-authentication. Other types of trigger conditions are considered herein.

In response to the trigger condition, data management controller 504 of UDM 218 sends a re-authentication notification message toward the AMF 212 to perform primary re-authentication of UE 106 (step 804), such as through network interface component 502. For example, data management controller 504 may send a re-authentication notification message (e.g., Nudm_SDM_Notification message) directly to AMF 212 requesting that AMF 212 initiate primary re-authentication with AUSF 210, such as by invoking the Nausf_UEAuthentication service (see FIG. 3, where AMF 212 (through SEAF 302) sends a Nausf_UEAuthentication_Authenticate Request message 312 to AUSF 210 to initiate primary authentication). In another example, data management controller 504 may send a re-authentication notification message (e.g., a newly-defined Nudm_UEreauthentication_Notification message) to AUSF 210 with a re-authentication vector for primary re-authentication. AUSF 210 in turn sends a re-authentication notification message with a re-authentication vector to AMF 212.

One technical benefit of method 800 is the home network is able to trigger primary re-authentication of a UE 106 through UDM 218. UDM 218 holds the subscription information of any SUPI and the network operator could configure that re-authentication is, for example, allowed or not allowed for certain trigger conditions. Moreover, in current primary authentication procedures, even though a UE requests registration, UDM 218 is the entity which has the information of which type of authentication method (5G-AKA or EAP-AKA' or EAP-TLS) should be triggered for a particular UE/SUPI. Thus, it is beneficial for UDM 218 to decide based on internal configuration if re-authentication is allowed or not.

### Variant 1

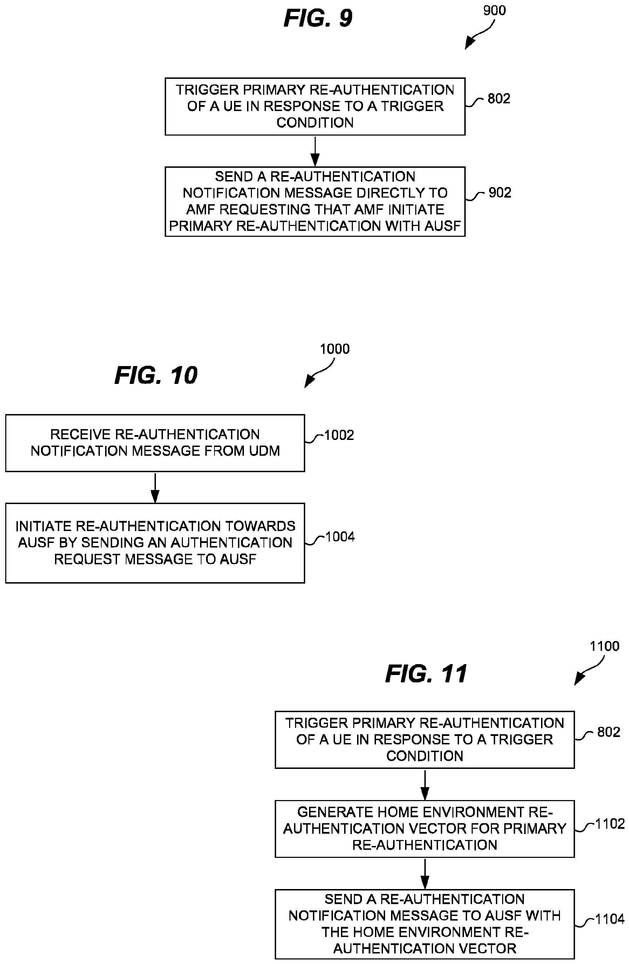

In one embodiment, UDM 218 may send a re-authentication notification message directly to AMF 212 requesting that AMF 212 initiate primary re-authentication to AUSF 210. FIGS. 9-10 are flow charts illustrating methods of performing a re-authentication procedure in an illustrative embodiment. The steps of method 900 in FIG. 9 are performed in UDM 218, and the steps of method 1000 are performed in AMF 212. Method steps discussed herein that are similar to a previous method may be shown with the same reference numbers.

In Variant 1, data management controller 504 of UDM 218 triggers primary re-authentication of UE 106 in response to a trigger condition (step 802). In response to triggering primary re-authentication, data management controller 504 sends a re-authentication notification message directly to AMF 212 requesting that AMF 212 initiate primary re-authentication with AUSF 210 (step 902), such as by invoking the Nausf_UEAuthentication service. For example, data management controller 504 may invoke the Nudm_SDM_Notification service operation by sending an Nudm_SDM_Notification message to the AMF 212. In one embodiment, the Nudm_SDM_Notification message includes a primary re-authentication indicator that indicates primary re-authentication of UE 106 is requested or required. For example, the primary re-authentication indicator may comprise a primary re-authentication required flag that is set to "true".

In FIG. 10, access and mobility controller 704 of AMF 212 receives the re-authentication notification message from UDM 218 (step 1002). Access and mobility controller 704 processes the re-authentication notification message to identify the primary re-authentication indicator provided by UDM 218, and invokes the Nausf_UEAuthentication service. Thus, access and mobility controller 704 initiates re-authentication towards AUSF 210 by sending an authentication request message to AUSF 210 (step 1004). More particularly, AMF 212 initiates re-authentication towards AUSF 210 by sending an Nausf_UEAuthetication_Authenticate Request message with the SUPI and SN-Name to AUSF 210. AUSF 210 in turn will send an Nudm_UEAuthentication_Get Request message with the SUPI and SN-Name towards UDM 218 as shown in FIG. 3. Re-authentication may then continue according to the authentication method selected by UDM 218.

### Variant 2

In one embodiment, UDM 218 may send a re-authentication notification message to AUSF 210 with a re-authentication vector for primary re-authentication, and AUSF 210 in turn sends a re-authentication notification message to AMF 212 with a re-authentication vector. FIGS. 11-13 are flow charts illustrating methods of performing a re-authentication procedure in an illustrative embodiment. The steps of method 1100 in FIG. 11 are performed in UDM 218, the steps of method 1200 are performed in AUSF 210, and the steps of method 1300 are performed in AMF 212.

In Variant 2, data management controller 504 of UDM 218 triggers primary re-authentication of UE 106 in response to a trigger condition (step 802). In response to triggering primary re-authentication, data management controller 504 selects or chooses the re-authentication method for primary re-authentication of UE 106 (based on the SUPI of UE 106), and creates or generates a home environment re-authentication vector (5G HE AV) for primary re-authentication (step 1102). For example, UDM 218 derives the K_{AUSF} key and calculates an expected response (XRES*) to a challenge. UDM 218 creates the home environment re-authentication vector comprising an authentication token (AUTN), the expected response (XRES*), the K_{AUSF} key, and a random challenge (RAND) as discussed in FIG. 4.

Data management controller 504 sends a re-authentication notification message to AUSF 210 with the home environment re-authentication vector (step 1104). For example, a new Nudm_UEreauthentication notification service operation may be defined. For the Nudm_UEreauthentication notification service operation, data management controller 504 may send a Nudm_UEreauthentication notification message to AUSF 210 that includes the home environment re-authentication vector, the SUPI, and/or other desired information.

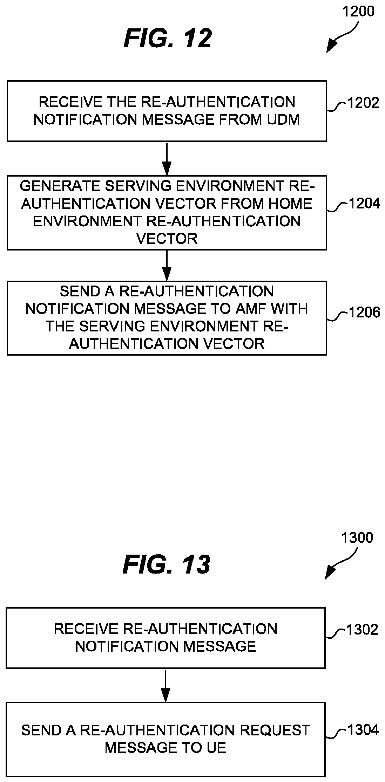

In FIG. 12, authentication controller 604 of AUSF 210 receives the re-authentication notification message from UDM 218 (step 1202). In response to the re-authentication notification message, authentication controller 604 generates a serving environment re-authentication vector from the home environment re-authentication vector received from UDM 218 (step 1204). For example, authentication controller 604 generates the serving environment re-authentication vector by computing the hash expected response (HXRES*) from the expected response (XRES*) and the K_{SEAF} key from the K_{AUSF} key, and replacing the XRES* with the HXRES* and the K_{AUSF} key with the K_{SEAF} key in the home environment re-authentication vector, as discussed in FIG. 4. Authentication controller 604 then sends a re-authentication notification message to AMF 212 with the serving environment re-authentication vector (step 1206).

In FIG. 13, access and mobility controller 704 of AMF 212 receives the re-authentication notification message from AUSF 210 (step 1302). In response, access and mobility controller 704 sends a Re-authentication request message to UE 106 with the authentication token (AUTN) and the random challenge (RAND) (step 1304). Re-authentication may then continue, such as described in FIG. 4. In this example, AMF 212 receives the re-authentication notification message from AUSF 210. In other examples, AMF 212 may receive a re-authentication notification message from another NF, such as an NF consumer or AF 222, and send a Re-authentication request message to UE 106 in response.

### Trigger conditions

As discussed above, there may be a variety of trigger conditions that trigger primary re-authentication of UE 106 at UDM 218. In one embodiment, a trigger condition for primary re-authentication may be wrap-around of a counter for UE Parameters Update (UPU). UDM 218 may decide to perform a UE parameters update anytime after UE 106 has been successfully authenticated and registered to the 5G system 100, as described in section 6.15.2 of 3GPP TS 33.501. For the UPU operation, AUSF 210 and UE 106 associate a 16-bit counter, Counter_{UPU}, with the K_{AUSF} key, and maintain the Counter_{UPU} for the lifetime of the K_{AUSF} key. UE 106 initializes the Counter_{UPU} to 0x00 0x00 when the newly derived K_{AUSF} key is stored, and stores the Counter_{UPU}. To generate the UPU-MAC-I_{AUSF}, AUSF 210 uses the Counter_{UPU}. The Counter_{UPU} is incremented by AUSF 210 for every new computation of the UPU-MAC-I_{AUSF}. The Counter_{UPU} is used as freshness input into UPU-MAC-I_{AUSF} and UPU-MAC-I_{UE} derivations to mitigate a replay attack. AUSF 210 sends the value of the Counter_{UPU} along with the UPU-MAC-I_{AUSF} to UE 106. UE 106 only accepts the Counter_{UPU} value that is greater than the stored Counter_{UPU} value. UE 106 updates the stored Counter_{UPU} with the received Counter_{UPU}, if the verification of the received UPU-MAC-I_{AUSF} is successful. UE 106 uses the Counter_{UPU} received from UDM 218 when deriving the UPU-MAC-I_{UE} for the UPU acknowledgement.

One present issue is that AUSF 210 suspends the UPU protection service for UE 106 if the Counter_{UPU} associated with the K_{AUSF} key of UE 106 is about to wrap around. To resolve this issue, UDM 218 may trigger primary re-authentication of UE 106 in response to a wrap-around indication, such as for the Counter_{UPU}.

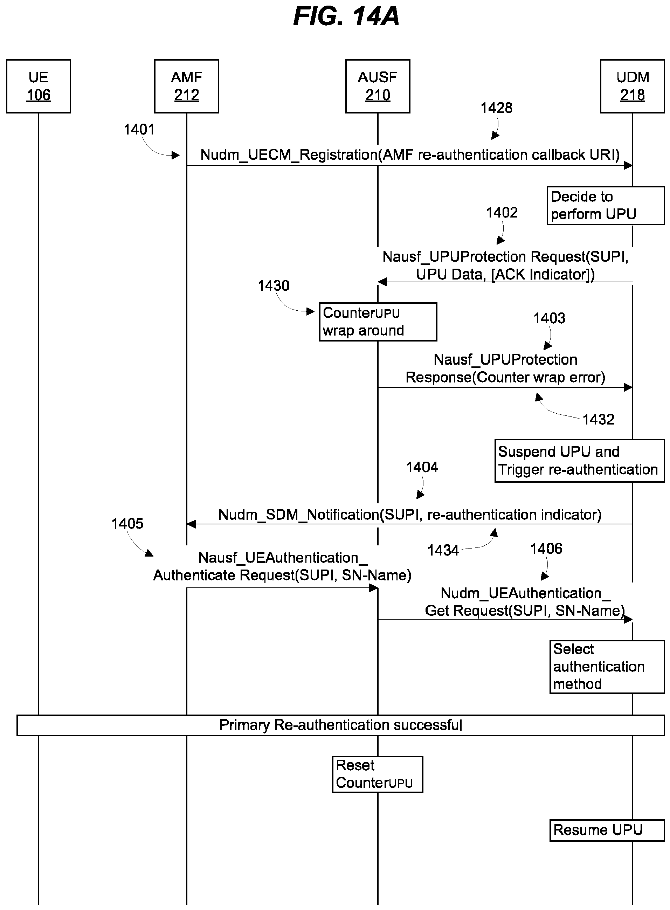

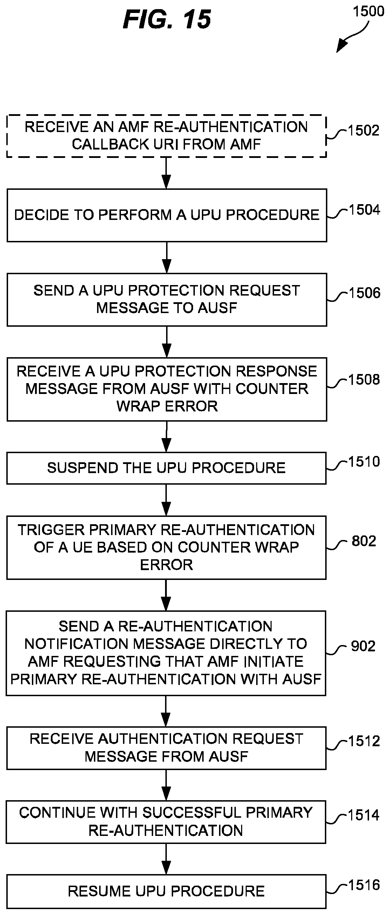

FIGS. 14A-14C are message diagrams illustrating triggering of primary re-authentication due to wrap-around of a UPU counter in illustrative embodiments. FIGS. 15-17 are flow charts illustrating methods of performing a re-authentication procedure in UDM 218 in an illustrative embodiment.

FIG. 14A illustrates Variant 1, where UDM 218 sends a re-authentication notification message directly to AMF 212. In method 1500 of FIG. 15, data management controller 504 of UDM 218 may receive an AMF re-authentication callback Uniform Resource Identifier (URI) from AMF 212 (optional step 1502). For example, AMF 212 may register with UDM 218 using the UE Context Management (UECM) service. In this example, AMF 212 may send a register request message (e.g., Nudm_UECM_Registration Request message 1401) to UDM 218, which includes an AMF re-authentication callback URI 1428 of AMF 212. Data management controller 504 stores the AMF re-authentication callback URI 1428, such as in local storage.

At some point, data management controller 504 decides to perform a UE Parameters Update (UPU) procedure (step 1504), such as for a RID or Network Slice Selection Assistance Information (S-NSSAI) update. For the UPU procedure, UDM 218 sends a UPU protection request message (e.g., Nausf_UPUProtection Request message 1402) to AUSF 210 (step 1506) with the SUPI, UPU data, and optional ACK indication. In response to the UPU protection request message, AUSF 210 tries to increment the Counter_{UPU} 1430 and determines that the Counter_{UPU} 1430 associated with the K_{AUSF} key of UE 106 is about to wrap around. Thus, AUSF 210 sends a UPU protection response message to UDM 218 (e.g., Nausf_UPUProtection Response message 1403) with a counter wrap error 1432 for Counter_{UPU} 1430. Data management controller 504 of UDM 218 receives the UPU protection response message from AUSF 210 with the counter wrap error 1432 (step 1508). In response to the counter wrap error 1432, data management controller 504 suspends the UPU procedure (step 1510), and triggers primary re-authentication (step 802).

For primary re-authentication, data management controller 504 sends a re-authentication notification message directly to AMF 212 (step 902) requesting that AMF 212 initiate primary re-authentication with AUSF 210, such as by invoking the Nausf_UEAuthentication service. In this example, data management controller 504 sends the re-authentication notification message directly to AMF 212 using the AMF re-authentication callback URI 1428. For example, data management controller 504 may invoke the Nudm_SDM_Notification service operation by sending an Nudm_SDM_Notification message 1404 to the AMF 212 using the AMF re-authentication callback URI 1428. In one embodiment, the Nudm_SDM_Notification message 1404 includes a primary re-authentication indicator 1434 that indicates primary re-authentication of UE 106 is requested or required. For example, the primary re-authentication indicator 1434 may comprise a primary re-authentication required flag that is set to "true".

In response to the re-authentication notification message from UDM 218, AMF 212 initiates re-authentication towards AUSF 210 by sending an authentication request message to AUSF 210 (e.g., Nausf_UEAuthetication_Authenticate Request message 1405) with the SUPI and SN-Name. AUSF 210 in turn sends an authentication request message (e.g., Nudm_UEAuthentication_Get Request message 1406) with the SUPI and SN-Name towards UDM 218. Data management controller 504 of UDM 218 receives the authentication request message from AUSF 210 (step 1512). In response to the authentication request message from AUSF 210, data management controller 504 chooses or selects the authentication method for primary re-authentication based on the SUPI, and continues with successful primary re-authentication (step 1514), such as shown in FIG. 4 (e.g., generate home environment re-authentication vector). After the K_{AUSF} is generated in AUSF 210, the Counter_{UPU} 1430 is reset at AUSF 210. Data management controller 504 then resumes the UPU procedure (step 1516).

One technical benefit is UDM 218 is able to trigger primary re-authentication of UE 106 when the Counter_{UPU} 1430 is about to wrap-around so that AUSF 210 will reset the Counter_{UPU} 1430. Thus, the UPU procedure may resume without having to de-register the UE 106.

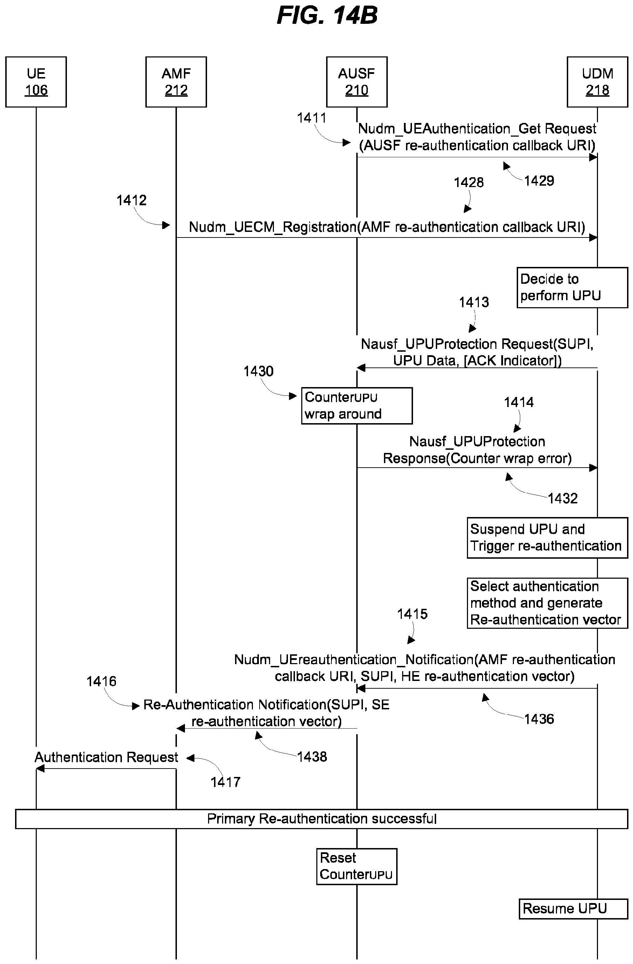

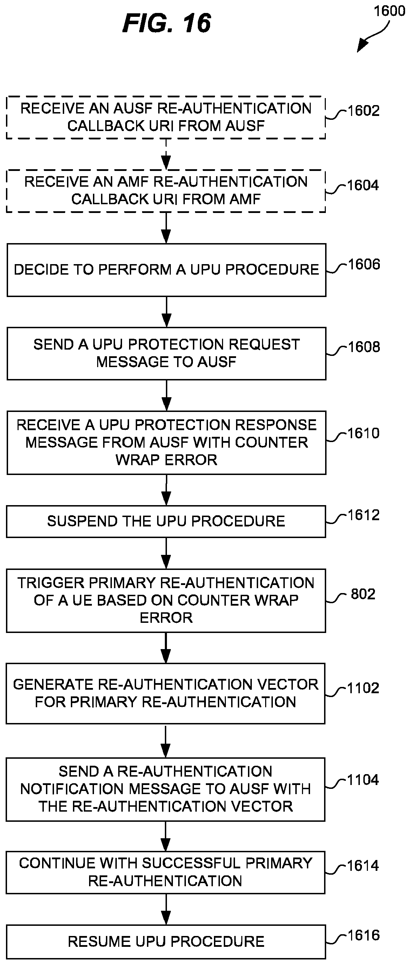

FIG. 14B illustrates Variant 2, where UDM 218 sends a re-authentication notification message to AUSF 210 with the re-authentication vector for primary re-authentication. In method 1600 of FIG. 16, data management controller 504 of UDM 218 may receive an AUSF re-authentication callback URI 1429 from AUSF 210 (optional step 1602). For example, AUSF 210 may send an Nudm _UEAuthentication_Get Request message 1411 during primary authentication that includes an AUSF re-authentication callback URI 1429. Data management controller 504 stores the AUSF re-authentication callback URI 1429, such as in local storage. Also, data management controller 504 of UDM 218 may receive an AMF re-authentication callback URI 1428 from AMF 212 (optional step 1604). As discussed above, AMF 212 may send a register request message (e.g., Nudm_UECM_Registration Request message 1412) to UDM 218, which includes an AMF re-authentication callback URI 1428 of AMF 212. Data management controller 504 stores the AMF re-authentication callback URI 1428, such as in local storage.

At some point, UDM 218 decides to perform a UE Parameters Update (UPU) procedure (step 1606). For the UPU procedure, UDM 218 sends a UPU protection request message (e.g., Nausf_UPUProtection request message 1413) to AUSF 210 (step 1608) with the SUPI, UPU data, and optional ACK indication. In response to the UPU protection request message, AUSF 210 tries to increment the Counter_{UPU} 1430 and determines that the Counter_{UPU} 1430 associated with the K_{AUSF} key of UE 106 is about to wrap around. Thus, AUSF 210 sends a UPU protection response message to UDM 218 (e.g., Nausf_UPUProtection Response message 1414) with a counter wrap error 1432 for Counter_{UPU} 1430. Data management controller 504 of UDM 218 receives the UPU protection response message from AUSF 210 with the counter wrap error 1432 (step 1610). In response to the counter wrap error 1432, data management controller 504 suspends the UPU procedure (step 1612), and triggers primary re-authentication (step 802).

For primary re-authentication, data management controller 504 selects or chooses the re-authentication method for primary re-authentication of UE 106 (based on the SUPI for UE 106), and creates or generates a home environment re-authentication vector 1436 (5G HE AV) for primary re-authentication with the previously-registered AMF provided in the SN-Name (step 1102). Data management controller 504 sends a re-authentication notification message to AUSF 210 with the home environment re-authentication vector 1436 (step 1104). For example, data management controller 504 uses the AUSF re-authentication callback URI 1429 previously provided by AUSF 210, and sends a Nudm_UEreauthentication_Notification message 1415 to AUSF 210 that includes the home environment re-authentication vector 1436, the AMF re-authentication callback URI 1428, the SUPI, and/or other desired information.

In response to the Nudm_UEreauthentication_Notification message 1415 from UDM 218, AUSF 210 generates a serving environment re-authentication vector 1438 from the home environment re-authentication vector 1436 received from UDM 218. AUSF 210 sends a Re-authentication notification 1416 to AMF 212 using the AMF re-authentication callback URI 1428 provided by UDM 218. AUSF 210 includes the SUPI and serving environment re-authentication vector 1438 for re-authentication in the Re-authentication notification 1416. In response to the Re-authentication notification 1416, AMF 212 sends an authentication request 1417 towards UE 106 with the authentication token (AUTN) and the random challenge (RAND).

Data management controller 504 continues with successful primary re-authentication (step 1614), such as shown in FIG. 4. After the K_{AUSF} is generated in AUSF 210, the Counter_{UPU} 1430 is reset at AUSF 210. Data management controller 504 then resumes the UPU procedure (step 1616).

One technical benefit is UDM 218 is able to trigger primary re-authentication of UE 106 when the Counter_{UPU} 1430 is about to wrap-around so that AUSF 210 will reset the Counter_{UPU} 1430. Thus, the UPU procedure may resume without having to de-register the UE 106.

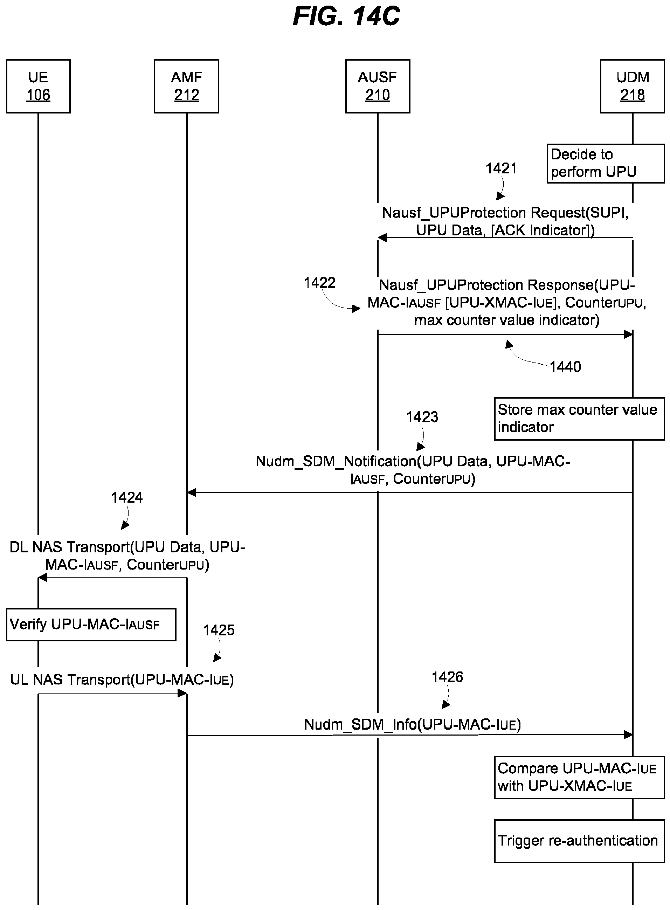

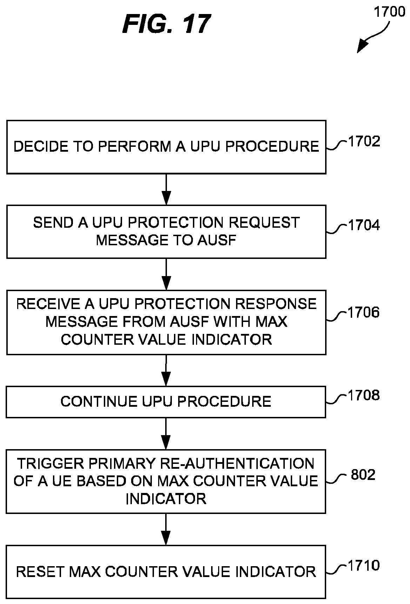

In the embodiments in FIGS. 14A and 14B, UDM 218 suspends the UPU procedure in response to a counter wrap error 1432 from AUSF 210. In another embodiment, a preparation phase may be performed when the Counter_{UPU} 1430 is reaching a maximum value. FIG. 14C illustrates a preparation phase for primary re-authentication. In method 1700 of FIG. 17, data management controller 504 of UDM 218 decides to perform a UE Parameters Update (UPU) procedure (step 1702). For the UPU procedure, UDM 218 sends a UPU protection request message (e.g., Nausf_UPUProtection Request message 1421) to AUSF 210 (step 1704) to get the UPU-MAC-I_{AUSF} and Counter_{UPU} 1430. AUSF 210 increments Counter_{UPU} 1430 for each new computation of the UPU-MAC-I_{AUSF}. AUSF 210 determines after the latest increment that Counter_{UPU} 1430 has reached a maximum value. AUSF 210 sends a UPU protection response message (e.g., Nausf_UPUProtection Response message 1422) to UDM 218 with the UPU-MAC-I_{AUSF}, the expected UPU-XMAC-I_{UE}, Counter_{UPU} 1430, and a maximum counter value indicator 1440. The maximum counter value indicator 1440 indicates that Counter_{UPU} 1430 has reached a maximum value. Data management controller 504 receives the UPU protection response message from AUSF 210 with the maximum counter value indicator 1440 (step 1706), and stores the maximum counter value indicator 1440.

Data management controller 504 then continues with the present iteration of the UPU procedure (step 1708). For example, data management controller 504 invokes the Nudm_SDM_Notification service operation by sending a Nudm_SDM_Notification message 1423, which includes the UPU Data, UPU-MAC-I_{AUSF}, and Counter_{UPU} 1430. Upon receiving the Nudm_SDM_Notification message 1423, AMF 212 sends a DL NAS Transport message 1424 to UE 106 with the UPU Data, UPU-MAC-I_{AUSF}, and Counter_{UPU} 1430. On receiving the DL NAS Transport message 1424, UE 106 calculates the UPU-MAC-I_{AUSF} in the same way as AUSF 210 on the received UPU Data and the Counter_{UPU} 1430, and verifies whether it matches the UPU-MAC-I_{AUSF} value received in the DL NAS Transport message 1424. If UDM 218 has requested an acknowledgement from UE 106 and UE 106 has successfully verified and updated the UPU Data provided by UDM 218, then UE 106 sends an UL NAS Transport message 1425 to the serving AMF 212. UE 106 generates the UPU-MAC-I_{UE}, and includes the generated UPU-MAC-I_{UE} in the UL NAS Transport message 1425. AMF 212 sends a Nudm_SDM_Info message 1426 with the UPU-MAC-I_{UE} to UDM 218. If UDM 218 indicated that UE 106 is to acknowledge the successful security check of the received UPU Data, then data management controller 504 compares the received UPU-MAC-I_{UE} with the expected UPU-XMAC-I_{UE} that UDM 218 stored temporarily.

After the present iteration of the UPU procedure is successful, data management controller 504 triggers primary re-authentication of UE 106 (step 802), such as according to Variant 1 or Variant 2. For example, after the UPU procedure, data management controller 504 checks whether a maximum counter value indicator 1440 is stored for UE 106. If the maximum counter value indicator 1440 is stored, UDM 218 initiates primary re-authentication of UE 106 after the present iteration of the UPU procedure. Thus, data management controller 504 triggers primary re-authentication (step 802) based on the maximum counter value indicator 1440 previously received from AUSF 210. After the re-authentication is successful, data management controller 504 resets the maximum counter value indicator 1440 stored in UDM 218 (step 1710).

One technical benefit is UDM 218 is able to initiate primary re-authentication of UE 106 before the Counter_{UPU} 1430 wraps-around. AUSF 210 alerts UDM 218 that the Counter_{UPU} 1430 will reach a maximum value in the next (or a future) iteration. Thus, the present iteration of the UPU procedure is okay to continue, but UDM 218 knows that the next (or a future) UPU procedure will result in a wrap-around error. UDM 218 therefore initiates primary re-authentication of UE 106 after the present UPU procedure.

In one embodiment, a trigger condition for primary re-authentication may be wrap-around of a counter for Steering of Roaming (SoR). UDM 218 may notify UE 106 of the changes to the SoR Information, as described in section 6.14.2 of 3GPP TS 33.501. For an SoR operation, AUSF 210 and UE 106 associate a 16-bit counter, Counter_{SoR}, with the K_{AUSF} key, and maintain the Counter_{SoR} for the lifetime of the K_{AUSF} key. UE 106 initializes the Counter_{SoR} to 0x00 0x00 when the newly derived K_{AUSF} key is stored, and stores the Counter_{SoR}. To generate the SoR-MAC-I_{AUSF}, AUSF 210 uses the Counter_{SoR}. The Counter_{SoR} is incremented by AUSF 210 for every new computation of the SoR-MAC-I_{AUSF}. The Counter_{SoR} is used as freshness input into SoR-MAC-I_{AUSF} and SoR-MAC-I_{UE} derivations to mitigate a replay attack. AUSF 210 sends the value of the Counter_{SoR} along with the SoR-MAC-I_{AUSF} to UE 106. UE 106 only accepts a Counter_{SoR} value that is greater than the stored Counter_{SoR} value. UE 106 updates the stored Counter_{SoR} with the received Counter_{SoR}, if the verification of the received SoR-MAC-I_{AUSF} is successful. UE 106 uses the stored Counter_{SoR} received from the HPLMN when deriving the SoR-MAC-I_{UE} for the SoR acknowledgement.

One present issue is AUSF 210 suspends the SoR protection service for UE 106 if the Counter_{SoR} associated with the K_{AUSF} key of UE 106 is about to wrap around. To resolve this issue, UDM 218 may trigger primary re-authentication of UE 106 in response to a wrap-around indication, such as for the Counter_{SoR}.

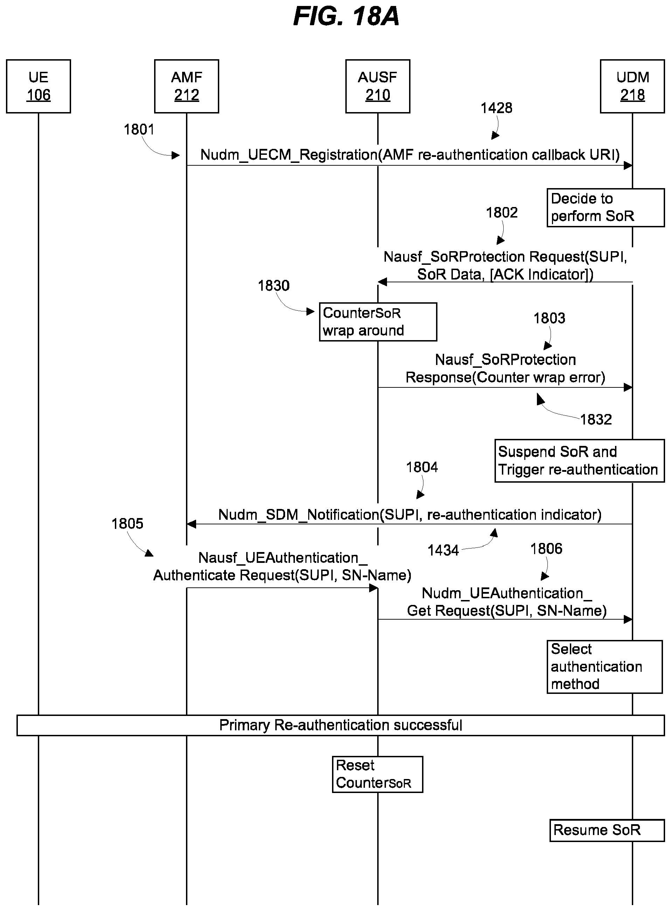

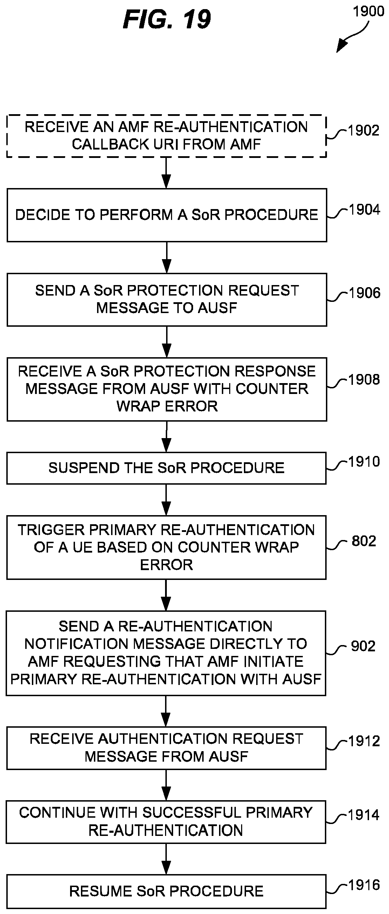

FIGS. 18A-18C are message diagrams illustrating triggering of primary re-authentication due to wrap-around of a SoR counter in illustrative embodiments. FIGS. 19-21 are flow charts illustrating methods of performing a re-authentication procedure in UDM 218 in illustrative embodiments.

FIG. 18A illustrates Variant 1, where UDM 218 sends a re-authentication notification message directly to AMF 212. In method 1900 of FIG. 19, data management controller 504 of UDM 218 may receive an AMF re-authentication callback URI from AMF 212 (optional step 1902). Data management controller 504 stores the AMF re-authentication callback URI 1428, such as in local storage.

At some point, data management controller 504 decides to perform a SoR procedure (step 1904). For the SoR procedure, UDM 218 sends a SoR protection request message (e.g., Nausf_ SoRProtection Request message 1802) to AUSF 210 (step 1906) with the SUPI, SoR data, and optional ACK indication. In response to the SoR protection request message, AUSF 210 tries to increment the Counter_{SoR} 1830 and determines that the Counter_{SoR} 1830 associated with the K_{AUSF} key of UE 106 is about to wrap around. Thus, AUSF 210 sends a SoR protection response message to UDM 218 (e.g., Nausf_SoRProtection Response message 1803) with a counter wrap error 1832 for Counter_{SoR} 1830. Data management controller 504 of UDM 218 receives the SoR protection response message from AUSF 210 with the counter wrap error 1832 (step 1908). In response to the counter wrap error 1832, data management controller 504 suspends the SoR procedure (step 1910), and triggers primary re-authentication (step 802).

For primary re-authentication, data management controller 504 sends a re-authentication notification message directly to AMF 212 requesting that AMF 212 initiate primary re-authentication with AUSF 210 (step 902), such as by invoking the Nausf_UEAuthentication service. In this example, data management controller 504 sends the re-authentication notification message directly to AMF 212 using the AMF re-authentication callback URI 1428. For example, data management controller 504 may invoke the Nudm_SDM_Notification service operation by sending an Nudm_SDM_Notification message 1804 to the AMF 212 using the AMF re-authentication callback URI 1428. In one embodiment, the Nudm_SDM_Notification message 1804 includes a primary re-authentication indicator 1434 that indicates primary re-authentication of UE 106 is requested or required. For example, the primary re-authentication indicator 1434 may comprise a primary re-authentication required flag that is set to "true".

In response to the re-authentication notification message from UDM 218, AMF 212 triggers re-authentication towards AUSF 210 by sending an authentication request message to AUSF 210 (e.g., Nausf_UEAuthetication_Authenticate Request message 1805) with the SUPI and SN-Name. AUSF 210 in turn sends an authentication request message (e.g., Nudm_UEAuthentication_Get Request message 1806) with the SUPI and SN-Name towards UDM 218. Data management controller 504 of UDM 218 receives the authentication request message from AUSF 210 (step 1912). In response to the authentication request message from AUSF 210, data management controller 504 chooses or selects the authentication method for primary re-authentication based on the SUPI, and continues with successful primary re-authentication (step 1914), such as shown in FIG. 4 (e.g., generate home environment re-authentication vector). After the K_{AUSF} is generated in AUSF 210, the Counter_{SoR} 1830 is reset at AUSF 210. Data management controller 504 then resumes the SoR procedure (step 1916).

One technical benefit is UDM 218 is able to trigger primary re-authentication of UE 106 when the Counter_{SoR} 1830 is about to wrap-around so that AUSF 210 will reset the Counter_{SoR} 1830. Thus, the SoR procedure may resume without having to de-register the UE 106.

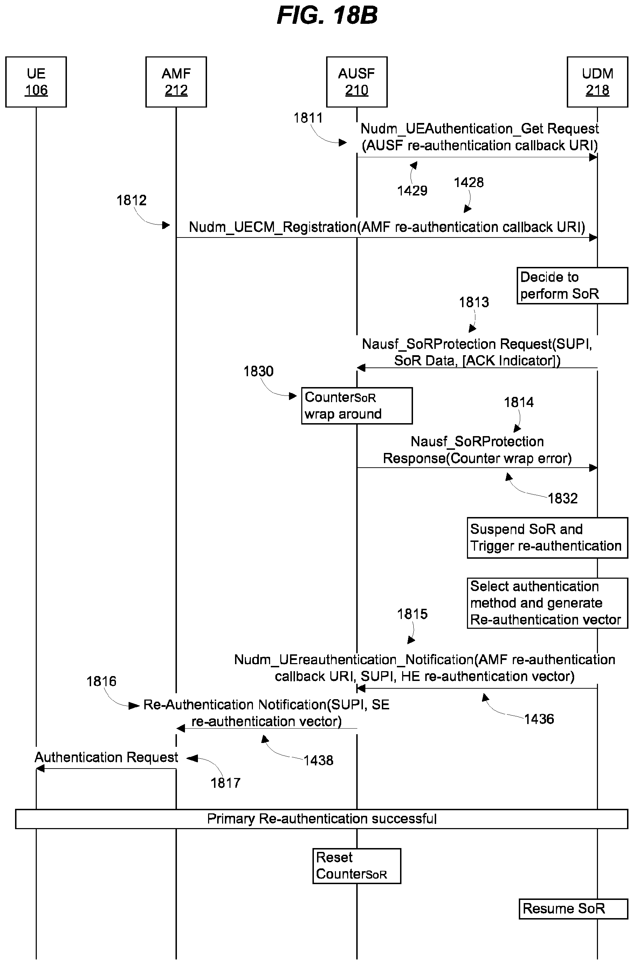

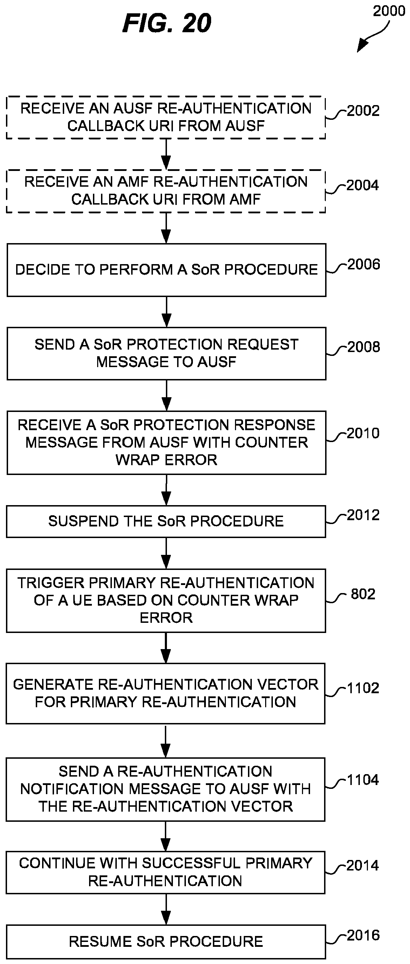

FIG. 18B illustrates Variant 2, where UDM 218 sends a re-authentication notification message to AUSF 210 with the re-authentication vector for primary re-authentication. In method 2000 of FIG. 20, data management controller 504 of UDM 218 may receive an AUSF re-authentication callback URI 1429 from AUSF 210 (optional step 2002). Also, data management controller 504 of UDM 218 may receive an AMF re-authentication callback URI 1428 from AMF 212 (optional step 2004).

At some point, UDM 218 decides to perform a SoR procedure (step 2006). For the SoR procedure, UDM 218 sends a SoR protection request message (e.g., Nausf_ SoRProtection Request message 1813) to AUSF 210 (step 2008) with the SUPI, SoR data, and optional ACK indication. In response to the SoR protection request message, AUSF 210 tries to increment the Counter_{SoR} 1830 and determines that the Counter_{SoR} 1830 associated with the K_{AUSF} key of UE 106 is about to wrap around. Thus, AUSF 210 sends a SoR protection response message to UDM 218 (e.g., Nausf_SoRProtection Response message 1814) with a counter wrap error 1832 for Counter_{SoR} 1830. Data management controller 504 of UDM 218 receives the SoR protection response message from AUSF 210 with the counter wrap error 1832 (step 2010). In response to the counter wrap error 1832, data management controller 504 suspends the SoR procedure (step 2012), and triggers primary re-authentication (step 802).

For primary re-authentication, data management controller 504 selects or chooses the re-authentication method for primary re-authentication of UE 106 (based on the SUPI for UE 106), and creates or generates a home environment re-authentication vector 1436 (5G HE AV) for primary re-authentication with the previously-registered AMF provided in the SN-Name (step 1102). Data management controller 504 sends a re-authentication notification message to AUSF 210 with the home environment re-authentication vector 1436 (step 1104). For example, data management controller 504 uses the AUSF re-authentication callback URI 1429 previously provided by AUSF 210, and sends a Nudm_UEreauthentication_Notification message 1815 to AUSF 210 that includes the home environment re-authentication vector 1436, the AMF re-authentication callback URI 1428, the SUPI, and/or other desired information.

In response to the Nudm_UEreauthentication_Notification message 1815 from UDM 218, AUSF 210 generates a serving environment re-authentication vector 1438 from the home environment re-authentication vector 1436 received from UDM 218. AUSF 210 sends a Re-authentication notification 1816 to AMF 212 using the AMF re-authentication callback URI 1428 provided by UDM 218. AUSF 210 includes the SUPI and serving environment re-authentication vector 1438 for re-authentication in the Re-authentication notification 1816. In response to the Re-authentication notification 1816, AMF 212 sends an authentication request 1817 towards UE 106 with the authentication token (AUTN) and the random challenge (RAND).

Data management controller 504 continues with successful primary re-authentication (step 2014), such as shown in FIG. 4. After the K_{AUSF} is generated in AUSF 210, the Counter_{SoR} 1830 is reset at AUSF 210. Data management controller 504 then resumes the SoR procedure (step 2016).

One technical benefit is UDM 218 is able to trigger primary re-authentication of UE 106 when the Counter_{SoR} 1830 is about to wrap-around so that AUSF 210 will reset the Counter_{SoR} 1830. Thus, the SoR procedure may resume without having to de-register the UE 106.

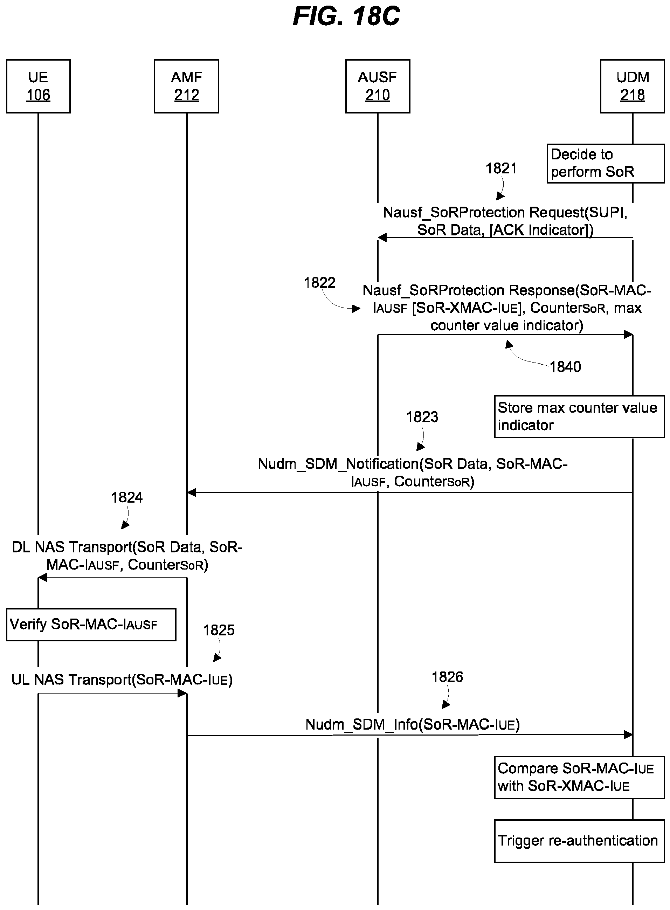

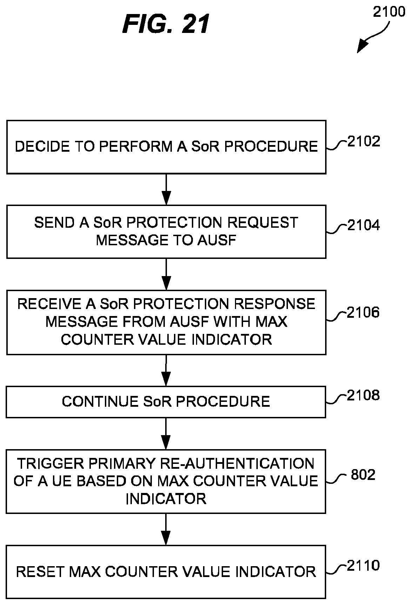

In the embodiments in FIGS. 18A and 18B, UDM 218 suspends the SoR procedure in response to a counter wrap error 1832 from AUSF 210. In another embodiment, a preparation phase may be performed when the Counter_{SoR} 1830 is reaching a maximum value. FIG. 18C illustrates a preparation phase for primary re-authentication. In method 2100 of FIG. 21, data management controller 504 of UDM 218 decides to perform a SoR procedure (step 2102). For the SoR procedure, UDM 218 sends a SoR protection request message (e.g., Nausf_ SoRProtection Request message 1821) to AUSF 210 (step 2104) to get the SoR-MAC-I_{AUSF} and Counter_{SoR} 1830. AUSF 210 increments Counter_{SoR} 1830 for each new computation of the SoR-MAC-I_{AUSF}. AUSF 210 determines after the latest increment that Counter_{SoR} 1830 has reached a maximum value. AUSF 210 sends a SoR protection response message (e.g., Nausf_SoRProtection Response message 1822) to UDM 218 with the SoR-MAC-I_{AUSF}, the expected SoR-XMAC-I_{UE}, Counter_{SoR} 1830, and a maximum counter value indicator 1840. The maximum counter value indicator 1840 indicates that Counter_{SoR} 1830 has reached a maximum value. Data management controller 504 receives the SoR protection response message from AUSF 210 with the maximum counter value indicator 1840 (step 2106), and stores the maximum counter value indicator 1840.

Data management controller 504 then continues with the present iteration of the SoR procedure (step 2108). For example, data management controller 504 invokes the Nudm_SDM_Notification service operation by sending a Nudm_SDM_Notification message 1823, which includes the SoR Data, SoR-MAC-I_{AUSF}, and Counter_{SoR} 1830. Upon receiving the Nudm_SDM_Notification message 1823, AMF 212 sends a DL NAS Transport message 1824 to UE 106 with the SoR Data, SoR-MAC-I_{AUSF}, and Counter_{SoR} 1830. On receiving the DL NAS Transport message 1824, UE 106 calculates the SoR-MAC-I_{AUSF} in the same way as AUSF 210 on the received SoR Data and the Counter_{SoR} 1830, and verifies whether it matches the SoR-MAC-I_{AUSF} value received in the DL NAS Transport message 1824. If UDM 218 has requested an acknowledgement from UE 106 and UE 106 has successfully verified and updated the SoR Data provided by UDM 218, then UE 106 sends an UL NAS Transport message 1825 to the serving AMF 212. UE 106 generates the SoR-MAC-I_{UE}, and includes the generated SoR-MAC-I_{UE} in the UL NAS Transport message 1825. AMF 212 sends a Nudm_SDM_Info message 1826 with the SoR-MAC-I_{UE} to UDM 218. If UDM 218 indicated that UE 106 is to acknowledge the successful security check of the received SoR Data, then data management controller 504 compares the received SoR-MAC-I_{UE} with the expected SoR-XMAC-I_{UE} that UDM 218 stored temporarily.

After the present iteration of the SoR procedure is successful, data management controller 504 triggers primary re-authentication of UE 106 (step 802), such as according to Variant 1 or Variant 2. For example, after the SoR procedure, data management controller 504 checks whether a maximum counter value indicator 1840 is stored for UE 106. If the maximum counter value indicator 1840 is stored, UDM 218 initiates primary re-authentication of UE 106 after the present iteration of the SoR procedure. Thus, data management controller 504 triggers primary re-authentication (step 802) based on the maximum counter value indicator 1840 previously received from AUSF 210. After the re-authentication is successful, data management controller 504 resets the maximum counter value indicator 1840 stored in UDM 218 (step 2110).

One technical benefit is UDM 218 is able to initiate primary re-authentication of UE 106 before the Counter_{SoR} 1830 wraps-around. AUSF 210 alerts UDM 218 that the Counter_{SoR} 1830 will reach a maximum value in the next (or a future) iteration. Thus, the present iteration of the SoR procedure is okay to continue, but UDM 218 knows that the next (or a future) SoR procedure will result in a wrap-around error. UDM 218 therefore initiates primary re-authentication of UE 106 after the present SoR procedure.

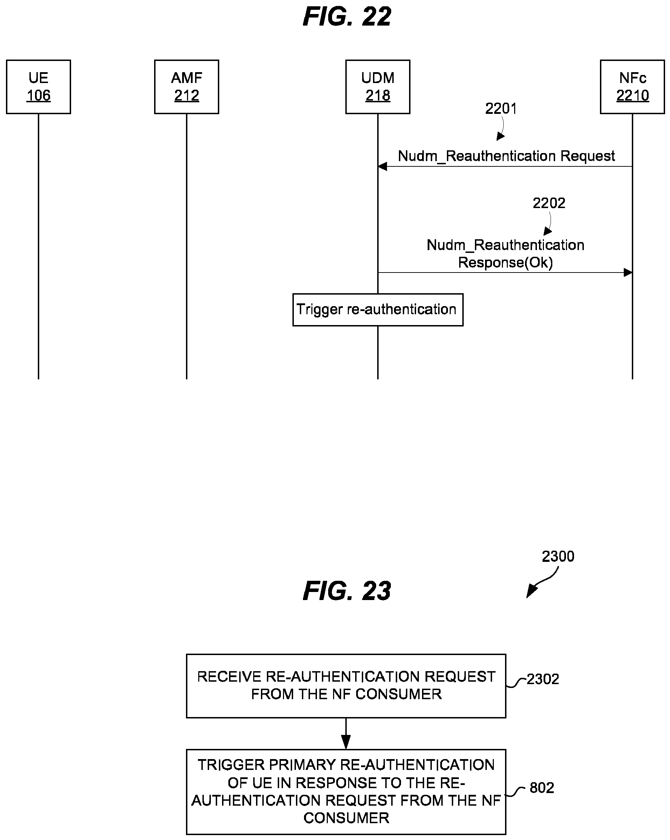

In one embodiment, a trigger condition for primary re-authentication may be a request from another network element/function. FIG. 22 is a message diagram illustrating triggering of primary re-authentication due to a request from another network element/function in an illustrative embodiment. There could be multiple reasons where a network element/function may invoke re-authentication, for example, key expiry. FIG. 23 is a flow chart illustrating a method of performing a re-authentication procedure in UDM 218 in an illustrative embodiment. In this embodiment, UDM 218 provides a service interface for other NF consumers to trigger a re-authentication of a UE 106. For example, a new Nudm_Reauthentication service operation may be defined. For the Nudm_Reauthentication service operation, an NF consumer (NFc) 2210 may send an Nudm_Reauthentication Request message 2201 to UDM 218 requesting re-authentication of a UE 106. In method 2300 of FIG. 23, data management controller 504 of UDM 218 receives the re-authentication request from the NF consumer 2210 (step 2302), and sends an Nudm_Reauthentication Response message 2202 to NF consumer 2210 acknowledging the request. Data management controller 504 then triggers primary re-authentication of UE 106 (step 802), such as according to Variant 1 or Variant 2, in response to the re-authentication request from the NF consumer 2210.

One technical benefit is UDM 218 is able to initiate primary re-authentication of UE 106 when requested by another NF. An NF may request re-authentication of a UE 106 to UDM 218, such as in an error case. UDM 218 may decide based on error reasoning and whether its configuration supports such a re-authentication for those kinds of errors.

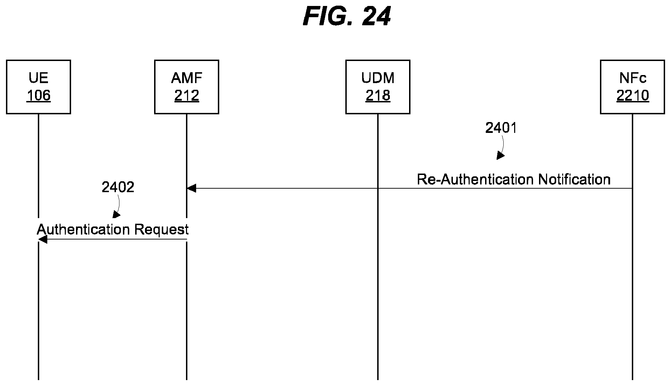

A network element/function may invoke re-authentication at UDM 218 as described above, or directly at AMF 212. FIG. 24 is a message diagram illustrating triggering of primary re-authentication at AMF 212 in an illustrative embodiment. An NF consumer (NFc) 2210 may send a re-authentication notification message 2401 directly to AMF 212 requesting re-authentication of a UE 106. AMF 212 receives the re-authentication notification message 2401 from NF consumer 2210 (see step 1302 of FIG. 13). In response, AMF 212 sends a Re-authentication request message to UE 106 (see step 1304).

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims and any equivalents thereof.

## Claims

1. A Unified Data Management (UDM) element (218) of a 5G core network (104), comprising:
at least one processor (530); and
at least one memory (532) including computer program code;
wherein the at least one memory and the computer program code are configured to, with the at least one processor, cause the UDM element at least to:
trigger primary re-authentication of User Equipment (UE) (106) in response to a trigger condition; and
send a re-authentication notification message toward an Access and Mobility Management Function (AMF) (212) to perform primary re-authentication of the UE.

2. The UDM element of claim 1, wherein the at least one processor further causes the UDM element at least to:
send the re-authentication notification message directly to the AMF requesting that the AMF initiate primary re-authentication with an Authentication Server Function (AUSF) (210).

3. The UDM element of claim 1, wherein the at least one processor further causes the UDM element at least to:
generate a home environment re-authentication vector (1436) for the primary re-authentication; and
send the re-authentication notification message to an Authentication Server Function (AUSF) (210) with the home environment re-authentication vector.

4. The UDM element of claim 1, wherein:
the trigger condition comprises wrap-around of a UE Parameters Update (UPU) counter (1430).

5. The UDM element of claim 4, wherein the at least one processor further causes the UDM element at least to:
decide to perform a UPU procedure;
send a UPU protection request message to an Authentication Server Function (AUSF) (210);
receive a UPU protection response message from the AUSF with a counter wrap error (1432) for the UPU counter;
suspend the UPU procedure; and
trigger the primary re-authentication of the UE based on the counter wrap error for the UPU counter.

6. The UDM element of claim 4, wherein the at least one processor further causes the UDM element at least to:
decide to perform a UPU procedure;
send a UPU protection request message to an Authentication Server Function (AUSF) (210);
receive a UPU protection response message from the AUSF with a maximum counter value indicator (1440) for the UPU counter;
continue with a present iteration of the UPU procedure; and
trigger the primary re-authentication of the UE after the present iteration of the UPU procedure based on the maximum counter value indicator.

7. The UDM element of claim 1, wherein:
the trigger condition comprises wrap-around of a Steering of Roaming (SoR) counter (1830).

8. The UDM element of claim 7, wherein the at least one processor further causes the UDM element at least to:
decide to perform a SoR procedure;
send a SoR protection request message to an Authentication Server Function (AUSF) (210);
receive a SoR protection response message from the AUSF with a counter wrap error (1832) for the SoR counter;
suspend the SoR procedure; and
trigger the primary re-authentication of the UE based on the counter wrap error for the SoR counter.

9. The UDM element of claim 7, wherein the at least one processor further causes the UDM element at least to:
decide to perform a SoR procedure;
send a SoR protection request message to an Authentication Server Function (AUSF) (210);
receive a SoR protection response message from the AUSF with a maximum counter value indicator (1840) for the SoR counter;
continue with a present iteration of the SoR procedure; and
trigger the primary re-authentication of the UE after the present iteration of the SoR procedure based on the maximum counter value indicator.

10. A method of performing primary re-authentication in a Unified Data Management (UDM) of a 5G core network, the method comprising:
triggering (802), at the UDM, primary re-authentication of User Equipment (UE) in response to a trigger condition; and
sending (804), at the UDM, a re-authentication notification message toward an Access and Mobility Management Function (AMF) to perform primary re-authentication of the UE.

11. The method of claim 10, wherein sending the re-authentication notification message toward the AMF comprises:
sending (902) the re-authentication notification message from the UDM directly to the AMF requesting that the AMF initiate primary re-authentication with an Authentication Server Function (AUSF).

12. The method of claim 11, further comprising:
receiving (1002) the re-authentication notification message at the AMF from the UDM; and
initiating (1004), at the AMF, re-authentication towards the AUSF by sending an authentication request message to the AUSF.

13. The method of claim 10, further comprising:
generating (1102), at the UDM, a home environment re-authentication vector for the primary re-authentication;
wherein sending the re-authentication notification message toward the AMF comprises sending (1104) the re-authentication notification message from the UDM to an Authentication Server Function (AUSF) with the home environment re-authentication vector.

14. The method of claim 13, further comprising:
receiving (1202) the re-authentication notification message from the UDM at the AUSF;
generating (1204), at the AUSF, a serving environment re-authentication vector from the home environment re-authentication vector received from the UDM; and
sending (1206) a re-authentication notification message from the AUSF to the AMF with the serving environment re-authentication vector.

15. The method of claim 10, wherein:
the trigger condition comprises wrap-around of a UE Parameters Update (UPU) counter or a Steering of Roaming (SoR) counter.
